# EUROPÄISCHE PATENTSCHRIFT

(11) **EP 3 293 557 B1**
(45) Veröffentlichungstag und Bekanntmachung des Hinweises auf die Patenterteilung: **22.12.2021**
(21) Anmeldenummer: 17187996.8
(22) Anmeldetag: 25.08.2017
(51) Int. Cl.: G02B 19/00, G02B 3/00, G02B 27/09, F21S 41/147

(54) **OPTIK UND OPTISCHES SYSTEM**
OPTICS AND OPTICAL SYSTEM
OPTIQUE ET SYSTÈME OPTIQUE

(30) Priorität: 08.09.2016 DE 102016217130
(43) Veröffentlichungstag der Anmeldung: 14.03.2018
(73) Patentinhaber: OSRAM GmbH, 80807 München (DE)
(72) Erfinder: Hartmann, Andreas, 98075 Ulm (DE)
(74) Vertreter: OSRAM GmbH - GC IP

(56) Entgegenhaltungen:
- EP-A1- 2 357 399
- AT-A1- 512 246
- DE-B3-102009 053 581

## Beschreibung

Die Erfindung geht aus von einem optischen System gemäß dem Oberbegriff des Anspruchs 1.

Aus dem Stand der Technik sind Optiken und optische Systeme bekannt, die für einen Fahrzeugscheinwerfer in Form eines Matrix-Scheinwerfers eingesetzt sind. Das optische System hat hierbei ein Modul mit einer Vielzahl von matrixartig angeordneten Licht emittierenden Dioden (LEDs). Nachgeschaltet zum Modul ist eine Primäroptik vorgesehen, die für eine jeweilige LED eine Einkoppelfläche aufweist. Mit der Primäroptik kann ein Lichtbild in ein Fernfeld abgebildet werden. Im Nachgang zur Primäroptik ist eine Sekundäroptik vorgesehen, wobei die Optiken in einem gemeinsamen Gehäuse angeordnet sind. Aus Bauraum- und Kostengründen entspricht eine Größe einer Einkoppelfläche der Sekundäroptik etwa einer Größe einer Auskoppelfläche der Primäroptik. Die Strahlung einer jeweiligen LED tritt aus der Auskoppelfläche der Primäroptik etwa als Lichtkegel aus, dessen Längsachse sich etwa parallel zu einer optischen Hauptachse des Systems oder einer optischen Hauptachse der Primäroptik erstreckt. Die optische Hauptachse des Systems kann dabei etwa senkrecht zur Auskoppelfläche der Primäroptik angeordnet sein. Optische Hauptachsen der Einkoppelflächen der Primäroptik erstrecken sich dann parallel zur optischen Hauptachse der Primäroptik. Nachteilig ist, dass die Strahlung der Lichtkegel der, insbesondere randseitigen, LEDs der Matrix teilweise, insbesondere aufgrund der vergleichsweise geringen Breite der Sekundäroptik, nicht auf die Einkoppelfläche der Sekundäroptik strahlen, sondern daran vorbei oder in ein Gehäuse strahlen. Durch die Verluststrahlung ist somit eine Systemeffizienz des optischen Systems verringert.

Ein optisches System gemäß dem Oberbegriff des Anspruchs 1 ist aus der Druckschrift AT 512 246 A1 bekannt

Die Aufgabe der vorliegenden Erfindung ist es, ein optisches System zu schaffen, welches vorrichtungstechnisch einfach ausgestaltet und kostengünstig ist und das zu einer hohen Systemeffizienz bei geringen Bauraumbedarf führt.

Die Aufgabe wird durch ein optisches System mit den Merkmalen des Anspruchs 1 gelöst.

Besonders vorteilhafte Ausgestaltungen finden sich in den abhängigen Ansprüchen.

Erfindungsgemäß beeinhaltet das optische System eine Optik für eine Mehrzahl von Strahlungsquellen, insbesondere von Licht emittierenden Dioden (LEDs), vorgesehen. Die Optik ist vorzugsweise für einen Matrix-Scheinwerfer vorgesehen. Die Optik hat eine Mehrzahl von Einkoppelflächen für die Strahlung von jeweils einer Strahlungsquelle oder von jeweils mehreren Strahlungsquellen.

Des Weiteren hat die Optik zumindest eine Auskoppelfläche. Eine jeweilige Einkoppelfläche weist hierbei eine optische Hauptachse auf. Des Weiteren hat die Optik eine optische Hauptachse. Erfindungsgemäß ist die optische Hauptachse mindestens einer der Einkoppelflächen zur optischen Hauptachse der Optik hin geneigt oder verkippt oder gekippt.

Diese Lösung hat den Vorteil, dass die über die geneigte Einkoppelfläche oder die über die geneigten Einkoppelflächen eingekoppelte Strahlung hin zur optischen Hauptachse der Optik gelenkt werden kann. Somit ist es ermöglicht, dass mehr Strahlung etwa in Richtung der optischen Hauptachse im Vergleich zum Stand der Technik strahlt, wodurch mehr Strahlung auch bei geringem Bauraum nutzbar ist.

Die LED Leuchtdiode kann in Form mindestens einer einzeln gehäusten LED oder in Form mindestens eines LED-Chips, der eine oder mehrere Leuchtdioden aufweist, vorliegen. Es können mehrere LED-Chips auf einem gemeinsamen Substrat ("Submount") montiert sein und eine LED bilden oder einzeln oder gemeinsam beispielsweise auf einer Platine (z.B. FR4, Metallkernplatine, etc.) befestigt sein ("CoB" = Chip on Board). Die mindestens eine LED kann mit mindestens einer eigenen und/oder gemeinsamen Optik zur Strahlführung ausgerüstet sein, beispielsweise mit mindestens einer Fresnel-Linse oder einem Kollimator. Anstelle oder zusätzlich zu anorganischen LEDs, beispielsweise auf Basis von AlInGaN oder InGaN oder AlIn-GaP, sind allgemein auch organische LEDs (OLEDs, z.B. Polymer-OLEDs) einsetzbar. Die LED-Chips können direkt emittierend sein oder einen vorgelagerten Leuchtstoff aufweisen. Alternativ kann die LED eine Laserdiode oder eine Laserdiodenanordnung sein. Denkbar ist auch eine OLED-Leuchtschicht oder mehrere OLED-Leuchtschichten oder einen OLED-Leuchtbereich vorzusehen. Die Emissionswellenlängen der LED können im ultravioletten, sichtbaren oder infraroten Spektralbereich liegen. Die LEDs können zusätzlich mit einem eigenen Konverter ausgestattet sein. Bevorzugt emittieren die LED-Chips weißes Licht im genormten ECE-Weißfeld der Automobilindustrie, beispielsweise realisiert durch einen blauen Emitter und einen gelb/grünen Konverter.

In weiterer Ausgestaltung der Erfindung sind die Einkoppelflächen in einer einzeiligen oder mehrzeiligen Matrix angeordnet, womit die Optik beispielsweise an ein Modul von matrixartig angeordneten Strahlungsquellen des Matrix-Scheinwerfers angepasst sein kann. Die optischen Hauptachsen der Einkoppelfläche einer Zeile der Matrix oder einer jeweiligen Zeile der Matrix können dabei etwa in einer Ebene oder einer jeweiligen Ebene liegen.

Die am weitesten von der optischen Hauptachse der Optik entfernten Einkoppelflächen oder die randseitigen Einkoppelflächen sind in Richtung einer Zeile der Matrix gesehen, geneigt, da in diesen Bereichen im Vergleich zum Stand der Technik der größte Verlust an Strahlung auftritt.

Mit anderen Worten hat die Verkippung einer oder mehrerer Einkoppelflächen der Optik zu Folge, dass die optische Hauptachse der verkippten Einkoppelfläche oder einer jeweiligen verkippten Einkoppelfläche und somit auch das entsprechende Strahlbündel oder der entsprechende Lichtkegel zum Strahlbündel der zentralen Einkoppelfläche verkippt ist/sind, womit ein größerer Anteil dieser verkippten Strahlbündel auf eine nachgeschaltete Optik oder Sekundäroptik treffen kann.

Vorzugsweise ist die Optik symmetrisch zu einer Ebene ausgebildet, in der etwa die optische Hauptachse der Optik liegt.

In weiterer Ausgestaltung der Erfindung sind bei einer Vielzahl von Einkoppelflächen ein Paar oder mehrere Paare der Einkoppelflächen vorgesehen, wobei ein Paar durch zwei Einkoppelflächen einer Zeile gebildet ist, die etwa einen gleichen Abstand zur optischen Hauptachse der Optik haben. Vorzugsweise sind die Einkoppelflächen eines Paares etwa symmetrisch zur optischen Hauptachse der Optik geneigt.

Sind mehrere geneigte Einkoppelflächen, in einer Zeile der Matrix gesehen, vorgesehen, so nimmt deren Neigung mit dem Abstand zur optischen Hauptachse der Optik zu.

Hierbei ist allerdings denkbar, dass die randseitigen Einkoppelflächen, in einer Zeile der Matrix gesehen, wiederum eine kleinere Neigung als die jeweils benachbarte Einkoppelfläche aufweisen können. Durch die zunehmende Neigung der Einkoppelflächen, je näher diese zum Rand der Optik angeordnet sind, kann ein Strahlungsbild auf einfache Weise verbessert werden, indem eine gleichmäßigere Abstrahlung erfolgt. Mit anderen Worten kann somit der Kippwinkel der Einkoppelflächen zum Rand der Optik hin zunehmen, da in dieser Richtung auch ein Abstand zum Gehäuse geringer wird.

In weiterer Ausgestaltung der Erfindung sind eine Mehrzahl von Vorsprüngen vorgesehen, die jeweils eine oder mehrere Einkoppelflächen aufweisen. Vorzugsweise ist eine jeweilige Einkoppelfläche jeweils an einem Vorsprung ausgebildet.

Vorzugsweise ist vorgesehen, dass die Einkoppelflächen und/oder die Vorsprünge aneinander anliegen oder aneinander angrenzen oder sich berühren oder jeweils einen gleichen Abstand zueinander haben oder miteinander verbunden sind. Somit ist vorzugsweise keine Stufe oder Lücke zwischen den Einkoppelflächen und/oder den Vorsprüngen vorgesehen. Dies führt zu einer verbesserten Fertigbarkeit der Optik.

In weiterer Ausgestaltung der Erfindung ist vorgesehen, dass, je größer die Neigung der Einkoppelfläche ist, desto kürzer deren Vorsprung ist.

Dies hat den Vorteil, dass auf vorrichtungstechnisch einfache Weise ein Abstand der Vorsprünge und/oder der Einkoppelflächen zueinander etwa gleich bleiben kann bzw. diese trotz Verkippung sich berühren können oder verbunden sein können.

Bevorzugterweise können die Einkoppelflächen, in einer Zeile der Matrix gesehen, derart geneigt sein, und/oder die Vorsprünge, in einer Zeile der Matrix gesehen, derart ausgestaltet sein, dass die Einkoppelflächen zusammen etwa eine Bogenform bilden, insbesondere in einer Ebene gesehen, in der sich die optische Hauptachse der Optik erstreckt und die sich etwa in Richtung der Zeile erstreckt.

Vorzugsweise ist die Optik von einem Halterand zum Befestigen umgriffen.

Es hat sich als vorteilhaft gezeigt, dass ein Neigungswinkel zwischen der optischen Hauptachse der jeweiligen Einkoppelfläche und der optischen Hauptachse der Optik kleiner oder gleich ±10°, insbesondere kleiner oder gleich ±5,5° ist, oder insbesondere zwischen etwa +1,5° und +5,5, oder etwa zwischen -1,5° und -5,5° liegt.

Erfindungsgemäß ist ein optisches System, insbesondere für ein Projektorsystem, insbesondere für einen Adaptive Driving Beam (ADB), vorgesehen. Dieses hat vorteilhafterweise eine Optik gemäß einem oder mehrerer der vorhergehenden Aspekte. Des Weiteren kann das optische System eine einzeilige oder mehrzeilige Matrix von Strahlungsquellen aufweisen. Das optische System weist vorteilhafterweise im Vergleich zum Stand der Technik aufgrund der Optik eine hohe Systemeffizienz auf.

Die Strahlungsquellen sind vorzugsweise gleich oder unterschiedlich ausgestaltet. Insbesondere sind die Strahlungsquellen als gleiche oder unterschiedliche LEDs ausgebildet. Vorzugsweise liegen die Strahlungsquellen vorrichtungstechnisch einfach in einer Ebene. Die Strahlungshauptachsen der Strahlungsquellen können etwa im Parallelabstand zueinander und/oder parallel zur optischen Hauptachse der Optik angeordnet sein. Des Weiteren können die Strahlungsquellen gegenüberliegend von der Optik vorgesehen sein. Vorzugsweise, wie oben stehend angeführt, kann jeweils eine Strahlungsquelle für eine jeweilige Einkoppelfläche vorgesehen sein.

In weiterer Ausgestaltung der Erfindung ist die Optik als Primäroptik eingesetzt. Diese kann dann eine Sekundäroptik nachgeschaltet sein. Denkbar ist, dass die Optiken eine gemeinsame optische Systemhauptachse haben. Diese kann etwa parallel oder etwa koaxial zur optischen Hauptachse der Optik ausgebildet sein.

Bei der Sekundäroptik handelt es sich beispielsweise um eine Linse, insbesondere um eine bikonvexe Linse. Eine Größe der Einkoppelfläche der Sekundäroptik kann bauraumsparend etwa einer Größe der Auskoppelfläche der Primäroptik entsprechen. Durch die geneigten optischen Hauptachsen der Einkoppelflächen kann dennoch im Vergleich zum Stand der Technik ein äußerst großer Teil der Strahlung in die Sekundäroptik eingekoppelt werden. Die Einkoppelfläche der Sekundäroptik und die Auskoppelfläche der Primäroptik weisen vorzugsweise aufeinander zu.

Mit Vorteil weisen die Primäroptik und die Sekundäroptik ein gemeinsames Gehäuse auf. Ein Strahlengang zwischen der Primäroptik und der Sekundäroptik kann vom Gehäuse umgriffen und begrenzt sein. Eine Breite des Strahlengangs, insbesondere in einer Ebene gesehen, die die optische Hauptachse der Primäroptik schneidet und die sich etwa entlang einer Zeile der Matrix erstreckt, kann einer Breite der Auskoppelfläche der Primäroptik etwa entsprechen oder größer sein.

Im Folgenden soll die Erfindung anhand von Ausführungsbeispielen näher erläutert werden. Die Figuren zeigen:
- Fig. 1: in einer schematischen Draufsicht ein erfindungsgemäßes optisches System gemäß einem Ausführungsbeispiel,
- Fig. 2a: in einer schematischen Draufsicht ein optisches System aus dem Stand der Technik,
- Fig. 2b: in einer schematischen Draufsicht ein optisches System gemäß einem weiteren Ausführungsbeispiel,
- Fig. 3a: eine Strahlungsintensitätsverteilung ausgangsseitig des optischen Systems aus Figur 2a und

- Fig. 3b: eine Strahlungsintensitätsverteilung ausgangsseitig des optischen Systems aus Figur 2b.

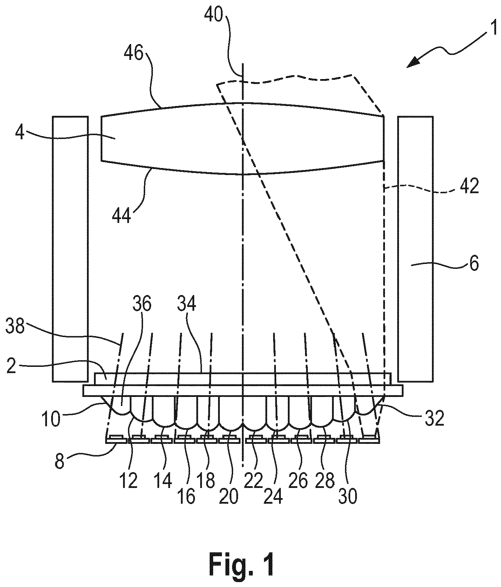

Gemäß Figur 1 hat ein optisches System 1 eine Optik in Form einer Primäroptik 2 und eine Optik in Form einer Sekundäroptik 4. Diese sind in einem gemeinsamen Gehäuse 6 angeordnet. Der Primäroptik 2 ist eine Matrix 8 mit einer Vielzahl von etwa in einer Ebene angeordneten LEDs vorgeschaltet. Hauptabstrahlachsen der LEDs 8 sind hierbei etwa in Parallelabstand zueinander angeordnet. Die LEDs 8 sind in einer Reihe angeordnet und bilden somit eine einzeilige Matrix.

Die Primäroptik 2 weist für eine jeweilige LED 8 jeweils eine Einkoppelfläche 10 bis 32 auf, die jeweils gegenüberliegend einer jeweiligen LED 8 angeordnet sind. Des Weiteren hat die Primäroptik 2 eine Auskoppelfläche 34. Die Einkoppelflächen 10 bis 32 sind jeweils an einem Vorsprung 36 der Primäroptik 2 ausgebildet, wobei der Einfachheit halber in Figur 1 nur ein Vorsprung 36 mit einem Bezugszeichen versehen ist. Die Einkoppelflächen 10 bis 32 weisen jeweils eine optische Hauptachse 38 auf, wobei in Figur 1 ebenfalls der Einfachheit halber nur eine optische Hauptachse 38 mit einem Bezugszeichen versehen ist.

Die Primäroptik 2 ist symmetrisch zur optischen Systemhauptachse 40 ausgebildet. Auf ihrer einen Symmetrieseite sind hierbei die Einkoppelflächen 10 bis 20 und auf ihrer anderen Symmetrieseite die Einkoppelflächen 22 bis 32 vorgesehen. Die optischen Hauptachsen 38 der mittleren Einkoppelflächen 20, 22 erstrecken sich etwa im Parallelabstand zur Systemhauptachse 40. Dagegen sind die optischen Hauptachsen 38 der anderen Einkoppelflächen 10 bis 18 und 24 bis 32 hin zur optischen Systemhauptachse 40 geneigt. Ein Neigungswinkel ist dabei umso größer, je weiter die entsprechende Einkoppelfläche 10 bis 18 und 24 bis 32 von der Mitte der Primäroptik 2 entfernt ist. Die Neigung der Hauptachsen 38 führt dann dazu, dass ein Lichtkegel einer jeweiligen emittierten Strahlung der LEDs 8 nach der Auskoppelfläche 34 ebenfalls hin zur Systemhauptachse 40 geneigt ist. Dies ist in Figur 1 anhand der äußeren Einkoppelfläche 32 dargestellt. Ein Lichtkegel 42, der mit einer Strichlinie gezeigt ist, ist hierbei hin zur Systemhauptachse 40 geneigt und wird somit vom Gehäuse 6 weggeführt. Ohne diese Neigung würde ein erheblicher Teil der Strahlung im Lichtkegel 42 auf das Gehäuse 6 treffen, womit die Systemeffizienz sinken würde.

Des Weiteren ist gemäß Figur 1 bei der Primäroptik 2 vorgesehen, dass die Vorsprünge 36 mit steigendem Abstand zum Zentrum kürzer werden, womit insgesamt die Einkoppelflächen 10 bis 32 etwa eine Bogenform aufweisen. Würde eine Länge der Vorsprünge 36 etwa gleichbleibend sein, so würde ein Spalt zwischen benachbarten Vorsprüngen 36 und somit ein Spalt zwischen benachbarten Einkoppelflächen 10 bis 32 entstehen, was fertigungstechnisch nachteilig wäre. Durch die kürzer werdenden Vorsprünge 36 können die Einkoppelflächen 10 bis 32 somit trotz Neigung aneinander angrenzen oder miteinander verbunden sein.

Gemäß Figur 1 ist erkennbar, dass eine Größe einer Einkoppelfläche 44 der Sekundäroptik 4 etwa einer Größe der Auskoppelfläche 34 entspricht. Des Weiteren ist eine Größe einer Auskoppelfläche 46 der Sekundäroptik 4 etwa entsprechend der Größe der Einkoppelfläche 44 ausgestaltet.

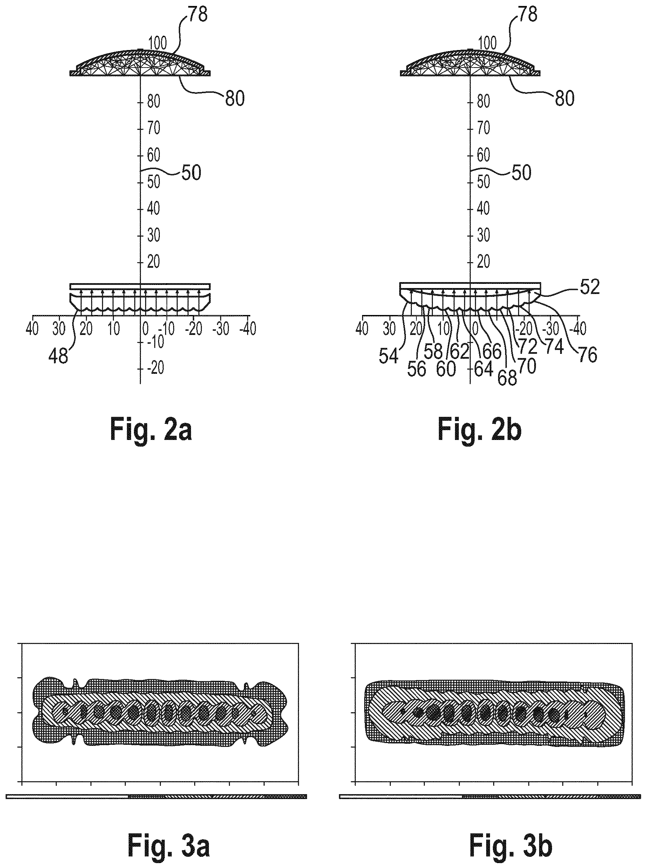

Gemäß Figur 2a ist ein optisches System aus dem Stand der Technik gezeigt, bei dem sich optische Hauptachsen von Einkoppelflächen 48 etwa im Parallelabstand zu einer optischen Systemhauptachse 50 erstrecken. Dagegen ist in Figur 2b eine erfindungsgemäße Optik in Form einer Primäroptik 52 dargestellt, bei der optische Hauptachsen von Einkoppelflächen 54 bis 76 in Bezug auf die mittleren Einkoppelflächen der Primäroptik 52 bzw. in Bezug auf die optische Systemhauptachse 50 geneigt sind. Im Unterschied zur Figur 1 sind Sekundäroptiken 78 in Figur 2a und 2b als etwa plankonvexe Linsen mit einer etwa planen Einkoppelfläche 80 ausgebildet.

Gemäß folgender Tabelle weisen die Einkoppelflächen 54 bis 76 folgende Neigungswinkel auf:

| Einkoppelfläche | 54 | 56 | 58 | 60 | 62 | 64 | 66 | 68 | 70 | 72 | 74 | 76 |
|---|---|---|---|---|---|---|---|---|---|---|---|---|
| Neigungswinkel [°] | - 5,5 | - 5,5 | - 4,5 | - 1,5 | 0 | 0 | 0 | 0 | 1,5 | 4,5 | 5,5 | 5,5 |

In Figur 3a ist eine Lichtintensitätsverteilung ausgangsseitig der Sekundäroptik 78 aus Figur 2a und in Figur 3b eine Lichtintensitätsverteilung ausgangsseitig von der Sekundäroptik 78 aus Figur 2b zeigt. Gemäß Figur 3b ist erkennbar, dass, insbesondere im Randbereich (Randpixel), eine homogene Ausleuchtung im Vergleich zur Figur 3a vorliegt. Gemäß Figur 3a (Stand der Technik) sind, insbesondere randseitig, nachteilig halbmondartige Ausleuchtungen bzw. eine eher inhomogene Ausleuchtung gegeben.

Offenbart ist eine Optik für einen Matrix-Scheinwerfer mit einer Vielzahl von Einkoppelflächen. Eine optische Hauptachse zumindest eine Einkoppelfläche ist hierbei hin zu einer optischen Hauptachse der gesamten Optik geneigt.

**BEZUGSZEICHENLISTE**

| | |
|---|---|
| Optisches System | 1 |
| Primäroptik | 2 |
| Sekundäroptik | 4 |
| Gehäuse | 6 |
| LED | 8 |
| Einkoppelfläche | 10 bis 32 |
| Auskoppelfläche | 34 |
| Vorsprung | 36 |
| optische Hauptachse | 38 |
| optische Systemhauptachse | 40 |
| Lichtkegel | 42 |
| Einkoppelfläche | 44 |
| Auskoppelfläche | 46 |
| optische Hauptachse | 48 |
| optische Systemhauptachse | 50 |
| Primäroptik | 52 |
| Einkoppelflächen | 54 bis 76 |
| Sekundäroptik | 78 |
| Einkoppelfläche | 80 |

## Patentansprüche

1. Optisches System mit einer einzeiligen oder mehrzeiligen Matrix von Strahlungsquellen (8) und einer Optik (2, 52), wobei die Optik (2, 52) eine Mehrzahl von Einkoppelflächen (10-32; 54-76) für die Strahlung jeweils einer Strahlungsquelle (8) oder jeweils mehrerer Strahlungsquellen (8) und eine Auskoppelfläche (34) hat, wobei die Einkoppelflächen (10-32; 54-76) jeweils eine optische Hauptachse (38) haben, wobei die Optik (2; 52) eine optische Hauptachse (40; 50) hat, wobei die optische Hauptachse (38) mindestens einer der Einkoppelflächen (10-18, 24-32; 54-60, 70-76) hin zur optischen Hauptachse (40; 50) der Optik (2; 52) geneigt ist, und wobei eine Mehrzahl von Vorsprüngen (36) für jeweils eine oder mehrere Einkoppelflächen (10-32; 54-76) vorgesehen ist, **dadurch gekennzeichnet, dass** je größer die Neigung der optischen Hauptachse (38) der jeweiligen Einkoppelfläche (10-32; 54-76) ist, desto kürzer deren Vorsprung ist, und die Strahlungsquellen (8) in einer Ebene angeordnet sind.

2. Optisches System nach Anspruch 1, wobei die Optik (2; 52) eine Primäroptik (2; 52) ist, der eine Sekundäroptik (4; 78) nachgeschaltet ist, wobei diese eine gemeinsame optische Systemhauptachse (40; 50) haben.

3. Optisches System nach Anspruch 2, wobei eine Größe einer Einkoppelfläche (44; 80) der Sekundäroptik (4; 78) etwa einer Größe der Auskoppelfläche (34) der Primäroptik (2; 52) entspricht.

## Claims

1. Optical system having a single-line or multi-line matrix of radiation sources (8) and an optical unit (2, 52), wherein the optical unit (2, 52) has a plurality of coupling-in surfaces (10-32; 54-76) for the radiation from in each case one radiation source (8) or in each case a plurality of radiation sources (8) and a coupling-out surface (34), wherein the coupling-in surfaces (10-32; 54-76) each have an optical main axis (38), wherein the optical unit (2; 52) has an optical main axis (40; 50), wherein the optical main axis (38) of at least one of the coupling-in surfaces (10-18, 24-32; 54-60, 70-76) is inclined towards the optical main axis (40; 50) of the optical unit (2; 52), and wherein a plurality of projections (36) are provided for in each case one or more coupling-in surfaces (10-32; 54-76), **characterized in that**, the greater the inclination of the optical main axis (38) of the respective coupling-in surface (10-32; 54-76) is, the shorter is the projection thereof, and the radiation sources (8) are arranged in one plane.

2. Optical system according to Claim 1, wherein the optical unit (2; 52) is a primary optical unit (2; 52), downstream of which a secondary optical unit (4; 78) is connected, wherein these optical units have a common optical system main axis (40; 50).

3. Optical system according to Claim 2, wherein a size of a coupling-in surface (44; 80) of the secondary optical unit (4; 78) approximately corresponds to a size of the coupling-out surface (34) of the primary optical unit (2; 52).

## Revendications

1. Système optique qui comprend une matrice de sources d'irradiation (8), du type à une seule ligne ou à plusieurs lignes, ainsi qu'une optique (2, 52), dans lequel l'optique (2, 52) possède un certain nombre de surfaces de couplage (10-32 ; 54-76) pour le rayonnement respectivement d'une source de rayonnement (8) ou respectivement de plusieurs sources de rayonnement (8), ainsi qu'une surface de découplage (34), dans lequel les surfaces de couplage (10-32 ; 54-76) possèdent respectivement un axe principal optique (38), dans lequel l'optique (2 ; 52) possède un axe principal optique (40 ; 50), dans lequel l'axe principal optique (38) d'au moins une des surfaces de couplage (10-18, 24-32 ; 54-60, 70-76) est inclinée vers la direction de l'axe principal optique (40 ; 50) de l'optique (2 ; 52), et dans lequel on prévoit un certain nombre de saillies (36) pour respectivement une ou plusieurs surfaces de couplage (10-32 ; 54-76), **caractérisé en ce que**, plus grande est l'inclinaison de l'axe principal optique (38) des surfaces de couplage respectives (10-32 ; 54-76), plus courte sera leur saillie, et les sources de rayonnement (8) sont disposées dans un plan.

2. Système optique selon la revendication 1, dans lequel l'optique (2 ; 52) représente une optique primaire (2 ; 52) en aval de laquelle est montée une optique secondaire (4 ; 78), dans lequel les optiques en question possèdent un axe principal du système optique commun (40 ; 50).

3. Système optique selon la revendication 2, dans lequel une dimension d'une surface de couplage (44 ; 80) de l'optique secondaire (4 ; 78) correspond approximativement à une dimension de la surface de découplage (34) de l'optique primaire (2 ; 52).
